**Europäisches Patentamt**

**European Patent Office**

**Office européen des brevets**

(19)

(11) Publication number: **0 127 951**

**A1**

(12) # EUROPEAN PATENT APPLICATION

(21) Application number: **84303012.3**

(22) Date of filing: **04.05.84**

(51) Int. Cl.³: **C 07 F 7/04**

(30) Priority: **05.05.83 GB 8312327**

(43) Date of publication of application:
**12.12.84 Bulletin 84/50**

(84) Designated Contracting States:
**AT BE CH DE FR GB IT LI LU NL SE**

(71) Applicant: **LAKSEED CHEMICALS LIMITED**
**The Mill Puleston Industrial Estate Ruabon Road**
**Wrexham Clwyd Wales(GB)**

(72) Inventor: **Yarwood, Robert Dennis**
**2 Heol Dinas Wrexham**
**Clwyd LU2 7RF Wales(GB)**

(74) Representative: **Stringer, David Hiram et al,**
**GEOFFREY OWEN & COMPANY 76 Lower Bridge Street**
**Chester(GB)**

(54) **Process for the manufacture of tetra-alkoxysilanes.**

(57) A process for the manufacture of tetra-alkoxysilanes in which each alkoxy group contains up to five carbon atoms, which comprises reacting together an alcohol, as herein defined, and particulate silicon or a metal silicide in a solution system containing a catalyst with a high concentration of alkali metal ion, the particle size of the silicon or the metal silicide being no greater than 20 microns.

EP 0 127 951 A1

-1-

DESCRIPTION

"PROCESS FOR THE MANUFACTURE OF TETRA-ALKOXYSILANES"

The present invention relates to a process for the manufacture of tetra-alkoxysilanes.

It is known from European Patent No. 0004730 that tetra-ethoxysilane can be prepared by reacting together ethanol and silicon or a metal silicide in a solution system containing a catalyst, the reaction products being tetra-ethoxysilane vapour, hydrogen gas and ethanol vapour, characterised in that the solution system has a thermal capacity sufficient to convert at least 66% of the solution or silicide and to discharge the reaction products, this being achieved by including at least 500 ml of inert solvent for each mole of silicon or silicide.

We have found that the cost effectiveness of this type of process, expressed as the weight of product produced from a given volume of reacting liquid in a given time in a given system, can be improved and that this is a function of the quality of the starting materials and the catalyst.

According to the present invention, therefore, a process for the manufacture of tetra-alkoxysilanes in which each alkoxy group contains up to five carbon atoms is provided which comprises reacting together an alcohol, as herein defined, and particulate silicon or a metal silicide in a solution system containing a catalyst with a high concentration of alkali metal ion, the particle size of the silicon or metal silicide being no greater than 20 microns.

When we refer to "alcohol" in the present specification in relation to our invention we include methanol, ethanol, a propanol, a butanol, methoxyethanol, ethoxyethanol and aminosubstituted alcohols having up to five carbon atoms. The alcohol is preferably as dry as possible.

-2-

The catalyst may be, for example, the sodium salt of 2-methoxyethanol or of 2-butoxyethanol but it is preferred to use the sodium salt of 2-ethoxyethanol. It is possible to use a salt of another alkali metal, for example, a potassium salt, in place of a sodium salt although this would be more expensive.

A suitable high concentration of the sodium salt of 2-ethoxyethanol in the preparation of tetra-ethoxysilane is 5 gramme moles of sodium per litre of tetra-ethoxysilane. Higher concentrations of catalyst can be used and the upper limit is affected by catalyst solubility.

In order to maintain the high concentration of alkali metal ion in the reactor the plant is designed to give a volume of liquids which is approximately constant at all times.

The invention is illustrated by the following Example.

EXAMPLE

Tetra-ethoxysilane 200 kgs (215 litres) 2 micron silicon 70 kg (2.5 mls)

Catalyst 177 kgs (containing 1 kg/mole Na ion).

70 kgs (2.5 mls) of silicon powder (at least 95% pure) are slurried with 200 kgs (215 litres) of tetra-ethoxysilane (TEOS) and pumped to a reactor and this is followed by the addition of 177 kgs of the sodium salt of 2-ethoxyethanol (containing 1 kg/mole sodium ion) as catalyst. The mixture is stirred and heated to 130°C when ethanol which is as dry as possible is fed to the reactor. Hydrogen gas is evolved and the reaction becomes exothermic and gradually rises to 165 - 175°C. Reaction temperature is controlled in the 160 - 180°C maximum range. The reaction is allowed to proceed for 18 hours by which time the production rate

has dropped to 70 - 100 kgs per hour. During this period the TEOS being produced has been removed and fractionated in situ with alcohol being recycled. TEOS is removed stoichiometrically as alcohol is converted to TEOS. This maintains the pot level at approximately 215 litres at all times. Under these conditions yields of 3400 kgs to 3800 kgs over 18 hours were achieved.

The average production rate was 189 kg/hr. to 211 kg/hr. of a product that was at least 98% pure TEOS.

When the procedure of the Example was repeated using identical conditions except that only half the quantity of catalyst is used, then the yield obtained was only 1690 kgs, i.e. 94 kgs/hr.

If the procedure of the Example is repeated except that commercially available 75 micron powdered silicon was used in place of the 2 micron silicon, then the yield falls to 1700 kgs over 18 hours, i.e. 95 kgs/hr.

......................................................................

-4-

## CLAIMS

1. A process for the manufacture of tetra-alkoxysilanes in which each alkoxy group contains up to five carbon atoms, which comprises reacting together an alcohol, as herein defined, and particulate silicon or a metal silicide in a solution system containing a catalyst with a high concentration of alkali metal ion, the particle size of the silicon or the metal silicide being no greater than 20 microns.

2. A process as claimed in claim 1, in which the catalyst is the sodium salt of 2-ethoxyethanol.

3. A process as claimed in claim 2, in which the concentration of the catalyst is 5 gramme moles of sodium per litre of tetra-ethoxysilane.

...............................................................

# European Patent Office

## EUROPEAN SEARCH REPORT

EP 84 30 3012

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | US-A-3 803 197 (ANDERSON) <br> * Examples 9, 10 * | 1-3 | C 07 F 7/04 |
| Y | US-A-4 211 717 (EMBLEM et al.) <br> * Example 11 * | 2-3 | |
| Y | US-A-3 627 807 (BLEH et al.) <br> * Examples 1, 4 * | 2-3 | |
| A | GB-A-2 017 129 (ZIRCONAL PROCESSES) | 1 | |
| A,D | EP-A-0 004 730 (ZIRCONAL PROCESSES) | 1 | |

-----

|  | TECHNICAL FIELDS SEARCHED (Int. Cl. 3) |
|---|---|
|  | C 07 F 7/04 |

The present search report has been drawn up for all claims

| Place of search <br> BERLIN | Date of completion of the search <br> 27-07-1984 | Examiner <br> KAPTEYN H G |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82